**Europäisches Patentamt**

**European Patent Office**

**Office européen des brevets**

(11) Veröffentlichungsnummer: **0 224 832 B2**

(12)

# NEUE EUROPÄISCHE PATENTSCHRIFT

④⑤ Veröffentlichungstag der neue Patentschrift: **27.09.95**

(21) Anmeldenummer: **86116256.8**

(22) Anmeldetag: **24.11.86**

(51) Int. Cl.⁶: **B60T 13/74**, B60T 13/68

---

(54) Elektrisches Bremssystem für ein Fahrzeug.

---

(30) Priorität: **06.12.85 DE 3543145**

(43) Veröffentlichungstag der Anmeldung:
**10.06.87 Patentblatt 87/24**

(45) Bekanntmachung des Hinweises auf die
Patenterteilung:
**07.02.90 Patentblatt 90/06**

(45) Bekanntmachung des Hinweises auf die
Entsheidung über den Einspruch:
**27.09.95 Patentblatt 95/39**

(84) Benannte Vertragsstaaten:
**DE FR GB IT SE**

(56) Entgegenhaltungen:
EP-A- 0 075 657         EP-A- 0 188 686
DE-A- 2 327 508        DE-A- 2 622 746
DE-A- 3 133 102        DE-A- 3 219 140
DE-C- 2 128 169         FR-A- 2 358 303

**PATENT ABSTRACTS OF JAPAN, Band 8, Nr.
124 (M-301)(1561), 9. Juni 1984; & JP - A - 59
29552 (NIPPON AIR BRAKE K.K.) 16.02.1984**

(73) Patentinhaber: **ROBERT BOSCH GMBH
Postfach 30 02 20
D-70442 Stuttgart (DE)**

(72) Erfinder: **Weiss, Eberhard
Schauchertstrasse 40
D-7254 Hemmingen (DE)**
Erfinder: **Stahl, Manfred
Grazer Strasse 48
D-7000 Stuttgart 30 (DE)**
Erfinder: **Domann, Helmut
Lohlenbachweg 3a
D-7250 Leonberg (DE)**
Erfinder: **Jung, Erich
Kreuzweg 19
D-7130 Mühlacker 3 (DE)**
Erfinder: **Maurer, Franz
Nebelhornstrasse 5
D-8960 Kempten (DE)**

EP 0 224 832 B2

Rank Xerox (UK) Business Services
(3.10/3.09/3.3.3)

**Beschreibung**

Die Erfindung betrifft ein Bremssystem für ein Fahrzeug, bei dem durch den Fahrer ein Sollwert $A_{Soll}$ einer Zustandsgröße durch ein elektrisches Signal vorgegeben wird und bei dem abhängig von der Differenz $\Delta$ des Sollwertsignals $A_{Soll}$ und eines die Zustandsgröße wiedergebenden, durch Messung gewonnenen Istwertsignals $A_{Ist}$ ein durch den Sollwert bestimmter Bremsdruck durch Steuerung einer Magnetventilanordnung mittels eines Schaltschwellen aufweisenden Reglers eingeregelt wird, wobei die Magnetventilanordnung zwischen einer Druckquelle und einer oder mehreren Radbremsen eingeschaltet ist und einen Druckabbau, -aufbau und eine Druckkonstanthaltung an den Radbremsen erlaubt.

Solche Bremssysteme sind bekannt, wobei die Zustandsgröße z.B. der Bremsdruck $P_B$ selbst, oder die Fahrzeugverzögerung $V_F$ oder der Radschlupf sein kann. In der DE-A 2 128 169 ist der Bremsdruck die verwendete Zustandsgröße, in der DE-A 2 327 508 die Fahrzeugverzögerung.

Derartige Bremsregler kann man sowohl bei Verwendung von Hydraulikflüssigkeit als auch bei Verwendung von Luft als Druckmittels als auch bei Verwendung der Kombination dieser Druckmittel einsetzen. Da zwischen Betätigung des Sollwertgebers und dem Beginn des Druckaufbaus und damit der Rückmeldung z.B. des Istdrucks, wenn die Sollwertvorgabe den Bremsdruck bestimmt, aufgrund der Leitungen, des Magnetventils usw. eine Verzugszeit auftritt, kommt es bei Bremsreglern der oben beschriebenen einfachen Art zum Pendeln des Istbremsdrucks um den Sollwert und damit zu einem mehrmaligen Betätigen der Magnetventilanordnung und zu einem mehrmaligen Ablassen und Füllen von Druckmittel.

Der Erfindung liegt die Aufgabe zugrunde das bekannte Bremssytem so zu verbessern, daß das mehrmalige Pendeln des Bremsdrucks um den Sollwert und der dadurch bedingte Ventil-Verschleiß und Druckmittelverbrauch weitgehend reduziert wird.

Diese Aufgabe wird durch die im Anspruch 1 angegebenen Merkmale gelöst.

Es sei an dieser Stelle auf die EP-A2 0 188 686 hingewiesen, die zum Stand der Technik nach Art. 54 (3) gehört.

Verfeinerungen und Weiterbildungen dieses Grundprinzips ergeben sich aus den Unteransprüchen, wobei Anspruch 19 einen Regler mit zusätzlicher Rückführung beschreibt, der bei der Erfindung eingesetzt werden kann, aber auch unabhängig von der Methode gemäß Anspruch 1 und dessen Unteransprüchen eingesetzt werden kann und dann bereits alleine das Pendeln des Drucks um den Sollwert weitgehend verhindert.

Z.B. bei Einsatz eines Bremsdruckreglers bei Nutzfahrzeugen (Druckluftbremsen) ergeben sich folgende Probleme, die durch die erfindungsgemäße Ausbildung beherrscht werden können:

- Die Regelstrecke selbst ist im Arbeitsbereich (1-10 bar) in ihrem Verhalten nichtlinear (pneumatische Strömungsvorgänge).
- Das dynamische Verhalten der Regelstrecke variiert mit

Temperatur, insbesondere der Ventilmembrane

Versorgungsdruck

Fertigungstoleranzen der Regelkreisglieder

Anlagenkonfiguration der verschiedenen Fahrzeuge

Verschleiß, Reparatur, Austausch der Anlagenteile.

Diese Einflüsse zu erfassen ist teuer bzw. nicht möglich.

Das Ziel ist es deshalb, einen selbstlernenden (adaptiven) Regler zu erstellen, der sich an die Gegebenheiten der Regelstrecke automatisch anpaßt. Unter dieser Voraussetzung ist es möglich, einen einzigen Reglertyp für alle Fahrzeuge und Betriebsarten zu erstellen. Die Vorteile dieser Lösung sind also eine kostengünstige Großserie und eine einfache Ersatzteilhaltung.

Auch ist die damit erreichbare Genauigkeit groß ($\pm$ 1% des Vorratsdrucks). Außerdem ist damit eine Feinstufigkeit der Druckänderung im Bereich $\pm$ 0,1 bar erreichbar.

Nähere Einzelheiten der Erfindung und ihre weiteren Ausgestaltungen sowie die dadurch bedingten Vorteile ergeben sich aus der Zeichnung und der folgenden Beschreibung.

Die Zeichnungen zeigen in

Fig. 1 das bekannte Grundprinzip das auch der Regelung gemäß der Erfindung zugrundeliegt,

Fig. 2 den Regelkreis für dieses Grundprinzip,

Fig. 3 Diagramme zur Erläuterung der Wirkungsweise des Grundprinzips,

Fig. 4 die mögliche Gestaltung des Bremssystems in Anwendung auf die Bremsen einer Fahrzeugachse,

Fig. 5 ein Ausführungsbeispiel für die erfindungsgemäße Gestaltung des Regelkreises,

Fig. 6 mehrere Diagramme zur Erläuterung der Wirkungsweise des Ausführungsbeispiels der Fig. 5,

Fig. 7 ein Diagramm des möglichen Verlaufs der Regelabweichung bei dem Ausführungsbeispiel der Fig. 5,

Fig. 8 ein weiteres Diagramm zur Erläuterung der $P_{Soll}$-Definition für die Impulslängenbemessung,

Fig. 9 eine mögliche Ausbildung des Regelkreises für die Grobregelung,

Fig. 10 Diagramme zur Erläuterung der Wirkungsweise des Regelkreises der Fig. 9.

Fig. 11 Diagramme zur Erläuterung der Vorgänge im Abfangbereich ($\Delta P_G \leq \Delta P_A$)

Fig. 12 Darstellung der Bereiche eines Ausführungsbeispiels mit sechs unterschiedlichen Regelungsbereichen.

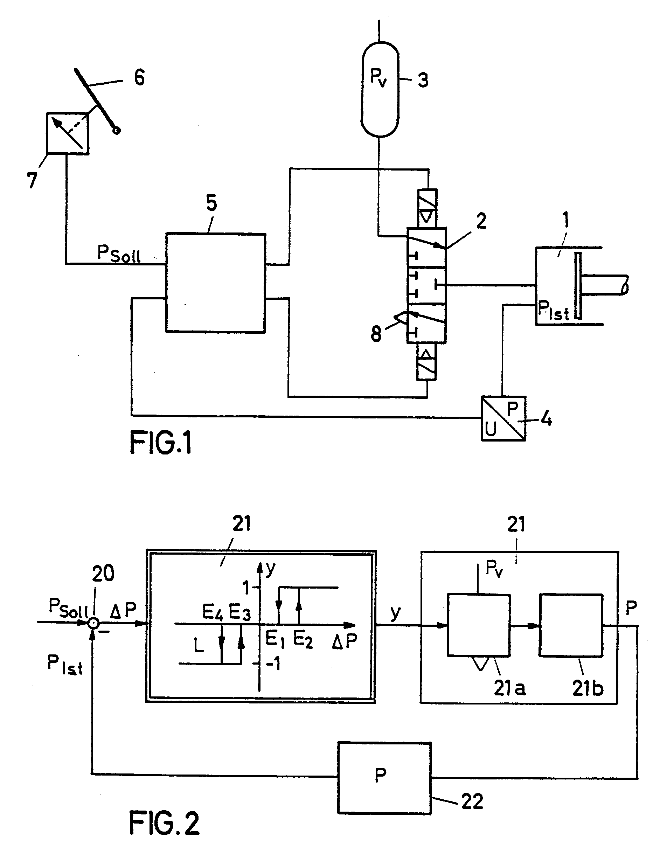

In Fig. 1 ist mit 1 ein Radbremszylinder mit 2 ein 3-Stellungs-Dreiwegemagnetventil mit 3 eine Druckquelle, mit 4 ein Druckwertgeber, mit 5 ein Regelgerät, mit 6 ein Bremspedal und mit 7 ein vom Pedal 6 betätigbarer Sollwertgeber, der ein von der Stellung des Pedals abhängiges elektrisches Signal liefert.

Der Solldruckwert $P_{Soll}$ wird im Regelgerät 5 mit dem durch den Meßwertgeber 4 gemessenen Istdruck verglichen. In Abhängigkeit davon, ob die Differenz $\Delta P$ dieser Drucksignale um einen vorgegebenen kleinen Wert in die eine oder andere Richtung voneinander abweichen, wird vom Regelgerät 5 die eine oder andere Wicklung des 3/3-Magnetventils angesteuert und damit entweder der Druck im Radbremszylinder 1 erhöht (wenn die Druckquelle 3 angeschaltet ist), oder erniedrigt, wenn ein Auslaß 8 an den Radbremszylinder angeschlossen ist. Als Druckmittel wird hier Luft unterstellt. In der Ventilstellung ohne Ansteuerung bleibt der Druck konstant.

Fig. 2 zeigt den zugehörigen Regelkreis. Hier ist die Vergleichsstelle der Drucksignale mit 20, ein Dreipunktregler mit 21 und eine Regelstrecke, die das Ventil (21a) und die Leitungen und den Bremszylinder (21b) umfaßt mit 21 bezeichnet. Der den Druck im Bremszylinder messende Meßwertgeber ist mit 22 bezeichnet.

Der Dreipunktregler 21 weist unterschiedliche Schaltschwellen für das Entstehen ($E_2$ und $E_4$) der Schaltsignale bzw. deren Verschwinden ($E_1$ und $E_3$) sowohl für den Druckaufbau wie für den Druckabbau auf (Hysterese).

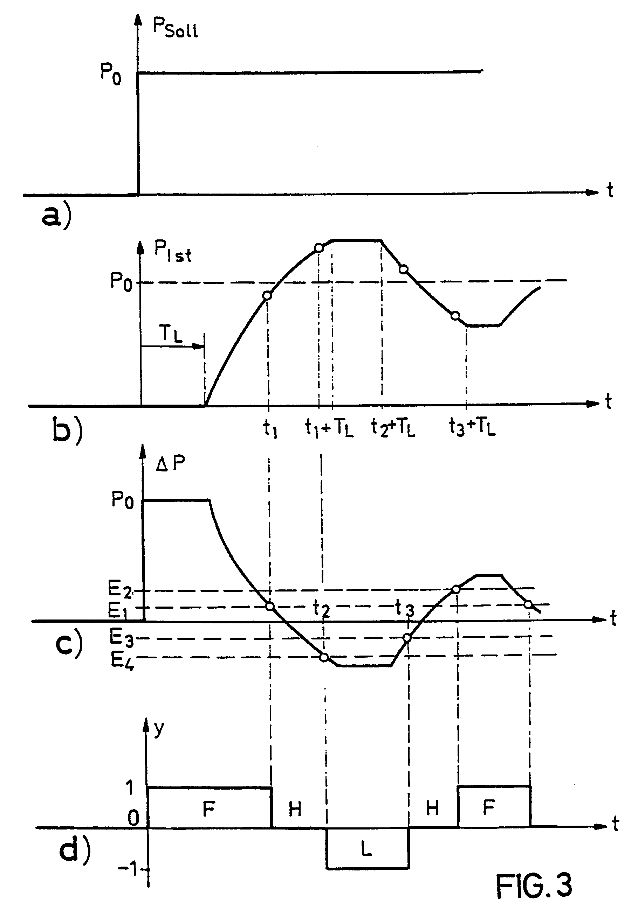

Die Wirkungsweise dieser Regelung ist aus Fig. 3 entnehmbar. In Fig. 3a ist ein Sollwertsignal $P_0$ als Sprung gezeigt. Fig. 3b zeigt den Istdruckverlauf $P_{ist}$. Man erkennt, daß der Druckaufbau um die Zeit $T_L$-bedingt durch die Ventileigenschaften (Totzeiten) und das System selbst (Leitungen, Bremszylinder, usw.)- verzögert einsetzt. Fig. 3c) zeigt den Verlauf der Differenz $\Delta P$ und Fig. 3d die Ausgangssignale y des Reglers, die dem Magnetventil 2 bzw. 21a zugeführt werden.

Man erkennt, daß, obwohl ab dem Zeitpunkt 0 ein Ansteuersignal F zur Druckerhöhung abgegeben wird, die Druckänderung (Fig. 3b) und damit eine Änderung der Differenz $\Delta P$ (Fig. 3c) erst nach der Zeit $T_L$ einsetzt. Im Regler 21 wird die Abschaltschwelle $E_1$ bei $t_1$ unterschritten und nun das Ventil in Grundstellung gebracht. Bei $t_2$ wird die Schaltschwelle $E_4$ unterschritten und nun das Ventil in die Stellung L gesteuert, in der es Druckmittel abläßt. Trotzdem setzt sich wegen der Verzugszeit $T_L$ der Druckaufbau bis $t_1 + T_L$ fort, wobei der Solldruck $P_0$ überschritten wird. Der Druck bleibt jetzt konstant und fängt bei $t_2 + T_L$ an zu fallen. Das bei $t_3$ endende Signal L (Schwelle $E_3$) wird erst bei $t_3 + T_L$ wirksam. Diese Signalfolge setzt sich weiter fort, d.h. der Istdruck pendelt mehrfach um den Solldruck $P_0$.

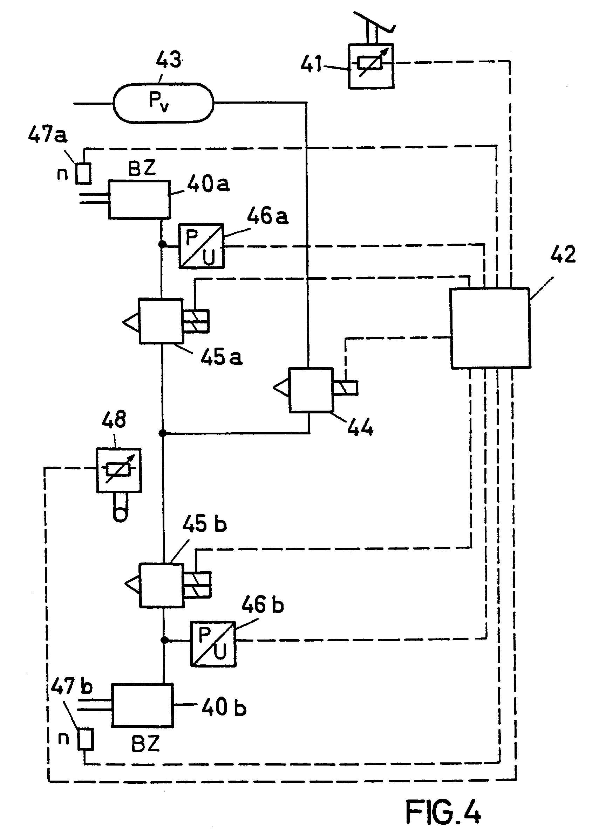

Fig. 4 zeigt das Bremssystem in einer etwas anderen Realisierung wie Fig. 1 und für die Bremsen 40a und 40b einer Achse; der Sollwertgeber trägt das Bezugszeichen 41, das Regelgerät das Bezugszeichen 42, die Druckquelle das Bezugszeichen 43 und ein 2/2-Füllmagnetventil das Bezugszeichen 44. Den beiden Bremsen bzw. deren Rädern sind Steuerventile 45a und 45b und Drehgeschwindigkeitssensoren 47a und 47b zugeordnet. Außerdem ist ein Achslastfühler 48 vorgesehen. Mit den Ventilen 45a und 45b kann auch individuell radweise der Druck geregelt werden, wenn über das Ventil 44 an deren Eingängen Versorgungsdruck anliegt.

Die Drehgeschwindigkeitssensoren 47a und 47b, die Ventile 45a und 45b und gegebenenfalls auch die Druckmeßwertgeber 46a und 46b sowie ein Teil des Regelgerätes 42 bilden auch ein Antiblockierregelsystem. Die Ventile 45a und 45b sind Dreistellungsventile. Die Druckmeßwertgeber 46a und 46b können auch im ABS-Fall zur Schlupfregelung herangezogen werden.

Das Dreistellungsventil 2 der Fig. 1 wird hier durch das Ventil 44 und die Ventile 45a und 45b nachgebildet. Durch Betätigen des Ventils 44 wird Druck an den Bremsen 40a und 40b eingesteuert, durch Ansteuern der Ventile 45a und 45b in die Abbaustellung wird Druck abgebaut. Die Druckhaltefunktion wird durch das Ventil 44 in seiner Grundstellung gewährleistet. Bei radweiser Regelung übernehmen die Ventile 45a und 45b alle Funktionen.

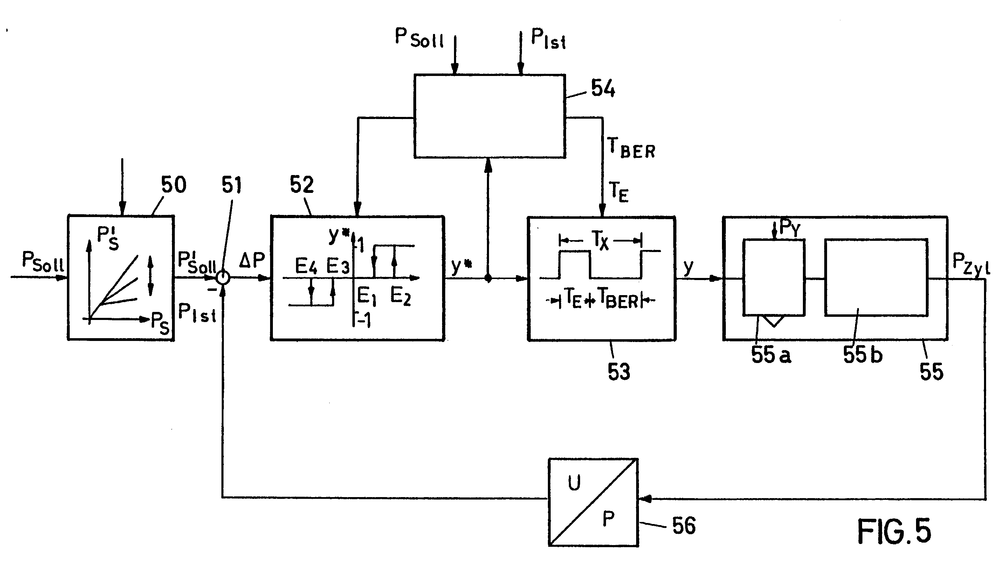

Fig. 5 zeigt den Regelkreis eines Ausführungsbeispiels der Erfindung. Der vom Sollwertgeber vorgegebene Solldruck $P_{Soll}$ wird in einem Block 50 entsprechend der Achslast gewichtet. Der daraus resultierende Solldruck $P'_{Soll}$ für die entsprechende Achse wird dem Diffenzbildner 51 zugeführt, der die Differenz $\Delta P = P_{Soll} - P_{Ist}$ bildet. Die Differenz wird einem Dreipunktregler 52 zugeführt, der dem in Zusammenhang mit Fig. 2 beschriebenen Regler 21 entspricht mit der Ausnahme, daß er umschaltbare Schwellen $E_1$ bis $E_4$ aufweist. Das Ausgangssignal $y^*$ des Reglers 52 wird Blöcken 53 und 54 zugeführt. Das Ausgangssignal y des Blocks 53 gelangt zu der Magnetventilanordnung (z.B. 44, 45a und 45b der Fig. 4), die hier als Block 55a in einem Block 55 dargestellt ist. Dieser Block 55 umfaßt auch noch die Regelstrecke Leitung und Bremszylinder als Block 55b.

Ein Druckmeßwertgeber 56 liefert ein dem Istdruck im Bremszylinder proportionales Signal zum Differenzbildner 51. Durch die Blöcke 52-54 wird die unterschiedliche Arbeitsweise des Regelgerätes in den Arbeitsbereichen $/\Delta P/ > \Delta P_G$ (Normalbetrieb) und $/\Delta P/ \leq \Delta P_G$ (Pulsbetrieb) bewirkt. Um die Bereiche voneinander zu unterscheiden, benötigt der Block 54 eine Information über die Größe von $\Delta P$, wozu ihm die Größen $P_{Soll}$ und $P_{Ist}$ zugeführt werden. Der Block 54 schaltet die Arbeitsweise des Blocks 53 bei Erreichen der Schwelle $\Delta P_G$ um. Während im Normalregelungsbereich die vom Regler 52 erzeugten Steuersignale $y^*$ unverändert den Block 53 passieren und die Ventilanordnung 55a ansteuern, gibt im Impulsbereich der Block 53, solange $y^*$ anliegt, gepulste Steuersignale für die Ventileinrichtung ab, wobei die Länge $T_E$ der Ansteuerimpulse sowohl für den Druckaufbau als auch für den Druckabbau variabel sind und von verschiedenen Parametern abhängen. Auch die sich jeweils anschließenden Pulspausen $T_{BER}$ sind variabel und dienen der Beruhigung des Systems.

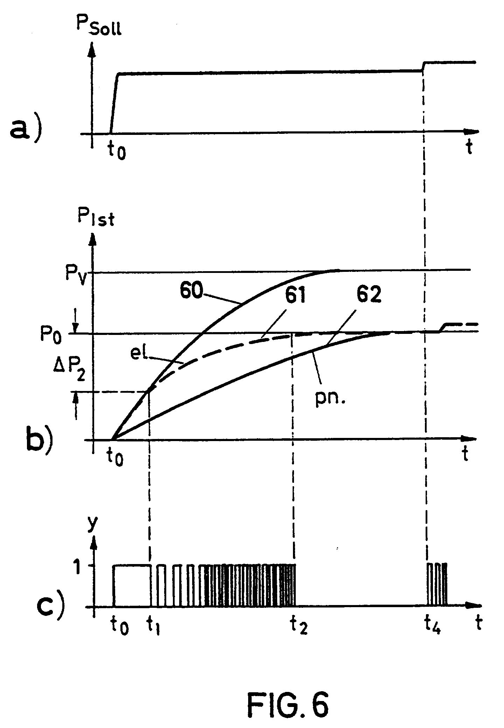

Die Wirkungsweise geht aus Fig. 6 hervor. Dort ist in Fig. 6a der Sollwert $P_{Soll}$ aufgetragen (es soll Bremsdruck eingesteuert werden). Fig. 6b zeigt den bei einem Vorratsdruck $P_V$ durch Öffnen des Ventils 44 bzw. 55a erreichbaren Druckverlauf 60, den durch die erfindungsgemäße Bremsregelung mit Normalregelbetrieb und Impulsbetrieb erreichten Druckverlauf 61 und den durch pneumatische Vorgabe $P_o$ erreichbaren Druckverlauf 62. Man erkennt, daß der Druck im Normalregelbetrieb ($t_o - t_1$) beim erfindungsgemäßen Regler (Kurve 61) genauso schnell ansteigt wie im Falle der Kurve 60 und daß der Solldruck $P_o$ früher als im Falle der Kurve 62 erreicht wird. Schließlich sind in Fig. 6c die Ansteuersignale $y$ für das Ventil gezeigt.

Man erkennt, daß zu Beginn, (und zwar solange $\Delta P > \Delta P_G$ ist ($t_o$ bis $t_1$)), das Ventil mit Dauersignal angesteuert wird und daß danach der gepulste Betrieb mit sich ändernder Impulsbreite und Impulspause stattfindet bis bei $t_2$ der Solldruck $P_o$ erreicht ist.

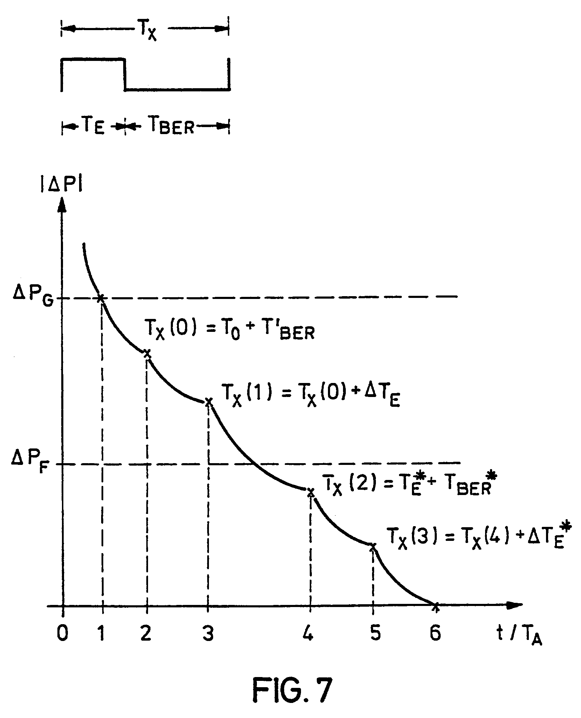

Fig. 7 zeigt die Regelspiele in einer Darstellung, bei der $/\Delta P/$ über der Zeit $t$ und zwar bezogen auf eine Konstante Zeit $T_A$ (Abtastzeit des Rechners) aufgetragen ist. Oberhalb des Werts $\Delta P_G$ befindet sich der Normalregelbereich. Zwischen $\Delta P_G$ und 0 befindet sich der Impulsregelbereich, der noch in zwei Teilbereiche 0 bis $\Delta P_F$ - (Feinregelbereich) und $\Delta P_F$ bis $\Delta P_G$ - (Grobregelbereich) unterteilt ist. Die Tatsache, daß $/\Delta P/$ aufgetragen ist, bedeutet, daß die gezeigte Annäherung an den Sollwert sowohl für Druckerhöhung als auch für Drucksenkung gilt. In dem Diagramm sind keine Druckkonstanthaltephasen sichtbar, weil in den Phasen $T_{BER}$ noch Druckausgleichsvorgänge vor sich gehen.

Fig. 7 zeigt, daß die Ansteuerung des Ventils im Normalbereich mit Dauersignal zum Zeitpunkt 1 zur Grobbereichsgrenze $\Delta P_G$ führt. Hier wird das Ventil abgeschaltet und eine Beruhigungszeit $T_{BER}$ = (2-1) ist wirksam. Danach erfolgt ausgelöst durch den Block 54 die Umschaltung auf Pulsbetrieb durch den Block 53. Im Zeitpunkt 2 werden für die Zeiten $T_E$ und $T_{BER}$, die zusammen $Tx_o$ bilden (sh. Fig. 7 oben) vorgegebene abgespeicherte Werte $T_o$ und $T_{BER}$ verwendet. Für die folgenden Punkte im Unterbereich $\Delta P_F </\Delta P/ < \Delta P_G$ errechnen sich die Werte $Tx$ nach folgenden Gesetzen:

$$T_{x(k)} = T_{x(K-1)} + \Delta T_E = T_{E(k-1)} + \Delta T_E + T_{BER}$$

Die Impulszeit $T_E$ ist also vom vorhergehenden $T_E$ und von $\Delta T_E$ abhängig. $\Delta T_E$ ist davon abhängig, in welchem Unterbereich die Regelung läuft ($\Delta P_i$)-, aber noch zusätzlich davon, wie groß der Solldruck $P_{Soll}$ ist und von der Zahl (n) der schon im jeweiligen Unterbereich aufgetretenen Impulse. $\Delta T_E$ errechnet sich z.B. aus:

$$\Delta T_E = \Delta T (\Delta P_i, P_s) \times 2^{f(n)}$$

f(n) ist vorzugsweise n.

Für den Feinregelungsbereich $\Delta P \leq \Delta P_F$ gelten die gleichen Beziehungen wie oben angegeben mit neuen Anfangswerten $T_E^*$ und $T_{BER}^*$ und neuem $\Delta T_E^*$.

In der Praxis wird z.B. der Solldruck in 10 Bereiche und wie in Fig. 7 angenommen die Druckdifferenz $\Delta P$ von 0 bis $\Delta P_G$ in zwei Bereiche aufgeteilt und dementsprechend für den Druckaufbau und -abbau je 20 Werte für $\Delta P'(\Delta P_i; P_{Soll})$ und $T_o$ und einem nicht flüchtigen Speicher abgespeichert und zur Errechnung von $T_E$ herangezogen. In Fig. 7 ist angenommen, daß der Solldruck konstant bleibt bzw. sich nur innerhalb einer bestimmten Bandbreite bewegt. Man erkennt, daß $T_x$ im Zeitraum 3 bis 4 stark anwächst, was auf die Verdopplung des Zeitfaktors ($2^2$ = 4) zurückzuführen ist.

Wie schon gesagt, wird im Unterbereich $\Delta P < \Delta P_F$, also bei $t/TA = 4$ wieder mit neuen Anfangswerten $T_E^*$ und $T_{BER}^*$ begonnen und danach $T_E^*$ durch $\Delta T_E^*$ und $2^{f(n)}$ variiert, bis bei $t/TA = 6$ der Sollwert erreicht ist. Der letzte Wert $T_{x(3)}$, der zum Sollwert führte ($\Delta P$ = 0) wird für spätere Bremsungen abgespeichert, so daß bei späteren vergleichbaren Bremsungen ($P_{Soll}$ ist gleich) $T_{x(3)}$ als erster Taktimpuls im Unterbereich $\Delta P < \Delta P_F$ verwendet wird. Entsprechend wird im Unterbereich $\Delta P_F < \Delta P < \Delta P_G$ für spätere vergleichbare Bremsungen derjenige Tx-Impuls abgespeichert, durch den $\Delta P < \Delta P_F$ wurde (im Beispiel Fig. 7 $T_x$ (1)).

Führte der letzte Impuls zu einem Überschreiten der Linie $\Delta P = 0$, so wird mit einem Folgeimpuls der Druck in der Gegenrichtung verändert. Die Zeit des letzten Impulses, hier z.B. (angenommen) $T_{E\ddot{U}} = T_{E*} + \Delta T_{E*}$ wird dann wie folgt verkürzt und danach für weitere Bremsungen (gleiches $P_{Soll}$)-abgespeichert.

$$T_{EKorrig.} = T_{E\ddot{U}} - [\Delta T' (\Delta P_i; P_{soll}) + a (\Delta P_i) \cdot /\Delta P^*/]$$

Die Verkürzung ist also vom vorher gültigen $\Delta T'$ abhängig, aber zusätzlich von einem Wert a, der seinerseits von $\Delta P_i$, also vom Unterbereich abhängig ist, und von dem Wert $\Delta P^*$ um den die 0-Linie überschritten wurde.

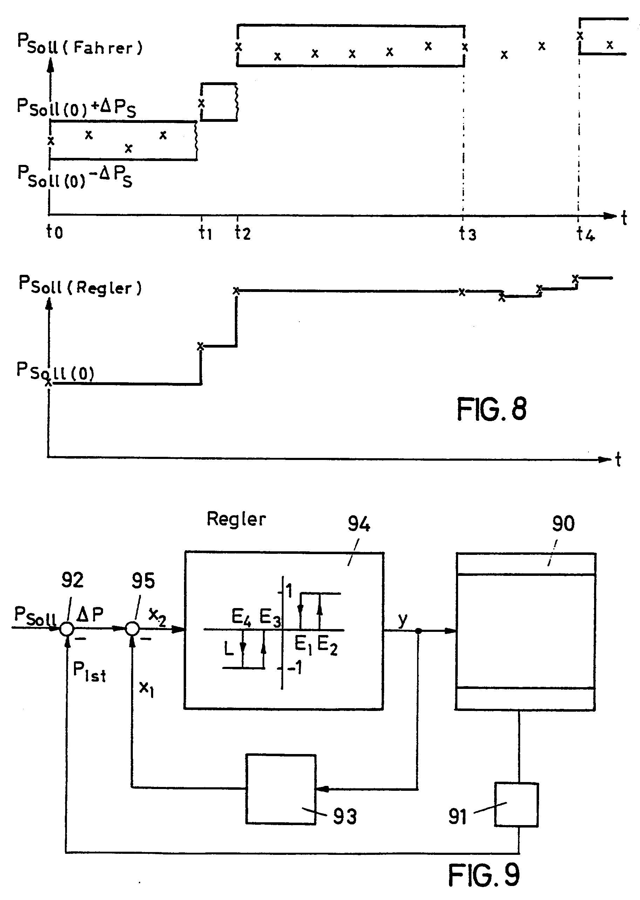

Der Regler ist so ausgelegt, daß er einem vorgegebenen Solldruckwert $P_{Soll}$ eine Bandbreite $P_{Soll} \pm \Delta P$ zuordnet und in der Folge jeweils diesen Wert für $P_{Soll}$ beibehält, solange diese Bandbreite nicht verlassen wird. Dies zeigt Fig. 8, in der oben die schwankenden $P_{Soll}$-Werte aufgezeichnet sind und unten die vom Regler gewerteten $P_{Soll}$-Werte angegeben sind. Damit eine Druckistwert-Änderungen eindeutig einem bestimmten Tx-Impuls zugeordnet werden kann, muß der Druck-Sollwert konstant sein, bzw. darf sich nur innerhalb der Bandbreite $\pm \Delta P$ bewegen.

Die TX-Impulse werden nur dann optimiert, wenn während der gesamten Impulszeit ($T_E + T_{BER}$) des vorhergehenden Impulses der Sollwert die Bandbreite $P_{Soll} \pm \Delta P$ nicht verläßt.

Hat die Reglerausgangsgröße $Y^*$ nach Fig. 5 eine bestimmte Zeit lang den Zustand Null, so wird die Bandbreitengrenze $\pm \Delta P$ für den Sollwert des Druckes gleich Null, so daß ab Zeitpunkt $t_3$ der Drucksollwert vom Fahrer direkt als Sollwert für den Druckregler verwendet wird. Sobald $Y^*$ O wird (Zeitpunkt $t_4$), werden wieder um den Drucksollwert des Fahrers die Bandbreitenwerte $\pm \Delta P$ gelegt.

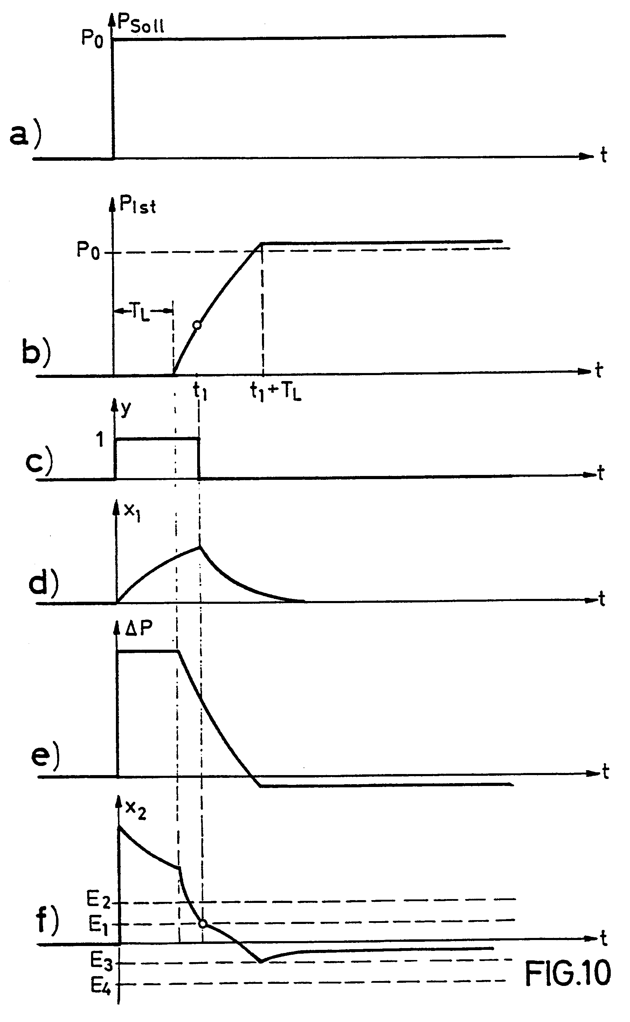

Fig. 9 zeigt eine weitere Ausgestaltung des Reglers 52 der Fig. 5, wie er im Grobregelbereich eingesetzt werden kann, aber auch völlig unabhängig von der Verwendung von Normal- und Pulsregelbereichen eingesetzt werden kann. Neben dem Wert $P_{ist}$ in einer Regelstrecke 90, die im Meßwertgeber 91 gemessen wird und einer Differenzstufe 92 zur Bildung von $\Delta P$ zugeführt wird, ist hier über den Regler 94 eine zusätzliche Rückführung 93 vorgesehen, die praktisch einen Vorhalt für den Regler bildet. Dies zeigt Fig. 10, wo in Fig. 10a der Solldruckwert $P_o$ wiedergegeben ist, und in Fig. 10b der Istwertverlauf $P_{ist}$ unter Berücksichtigung der Verzugszeit $T_L$. Fig. 10c zeigt das vom Regler 94 abgegebene Schaltsignal y. Dieses Schaltsignal wird durch das Rückführsignal $x_1$ der Rückführung 93 mittels des Differenzglieds 95 (sh. Fig. 10d) beeinflußt, das von O bis $t_1$ ansteigt und damit bereits in der Zeit $T_L$, in der $\Delta P$ konstant ist (sh.

Fig. 10e), das Eingangssignal $x_2$ des Reglers verkleinert (sh. Fig. 10f). Nach der Zeit $T_L$ überlagern sich die Einflüsse von $\Delta P$ und $x_1$, so daß es bei $t_1$ bereits zum Unterschreiten von $E_1$ kommt. Hier führt der durch das Signal $x_1$ gegebene Vorhalt in einem Regelspiel bereits ganz nahe an den Sollwert $P_{Soll}$ heran. Dabei muß die Rückführung 94 den Gegebenheiten entsprechend angepaßt sein.

Für den Grobregelbereich gilt primär das Ziel, den gewünschten Drucksollwert mit möglichst wenigen Schaltsignalen zu erreichen. Bei optimaler Anpassung würde dies in einem Schaltspiel gelingen. Die ausreichend bemessenen Beruhigungszeiten stellen sicher, daß an deren Ende Ausgleichsvorgänge abgeschlossen sind, so daß der nun vorhandene Druck richtig gemessen werden kann. Die im System vorhandenen Nichtlinearitäten und sonstigen Einflüsse werkden durch die die Änderungen der Parameter in Abhängigkeit vom Sollwert und vom $\Delta_p$-Bereich berücksichtigt.

Günstigerweise wird zwischen dem Normalregelbereich und dem Grobregelbereich im Falle des Aufbaus des Istdrucks ($P_{Soll} > P_{Ist}$) noch ein Zwischenbereich $\Delta P_G < \Delta_P < \Delta P_A$ eingeführt. Nun wird bereits bei Erreichen von $\Delta P_A$ das Ventil zum Zeitpunkt $t_o$ abgeschaltet. Nach Ablauf einer Beruhigungszeit wird zum Zeitpunkt $t_1$ die Regelabweichung $\Delta P$ gemessen.

Die Abschaltschwelle $\Delta P_A$ wird für spätere Bremsungen wie folgt verändert:

$$\Delta P_{A(neu)} = \Delta P_{A(alt)} - a \cdot \Delta P \; ; \; \Delta P_A \leq \Delta P_G$$

$\Delta P$ ist hierbei der positive als auch der negative Meßwert der Regelabweichung.

Der Wert der Variablen a berücksichtigt die Nichtlinearitäten der Regelstrecke (z.B. a = f ($P_{Soll}$).

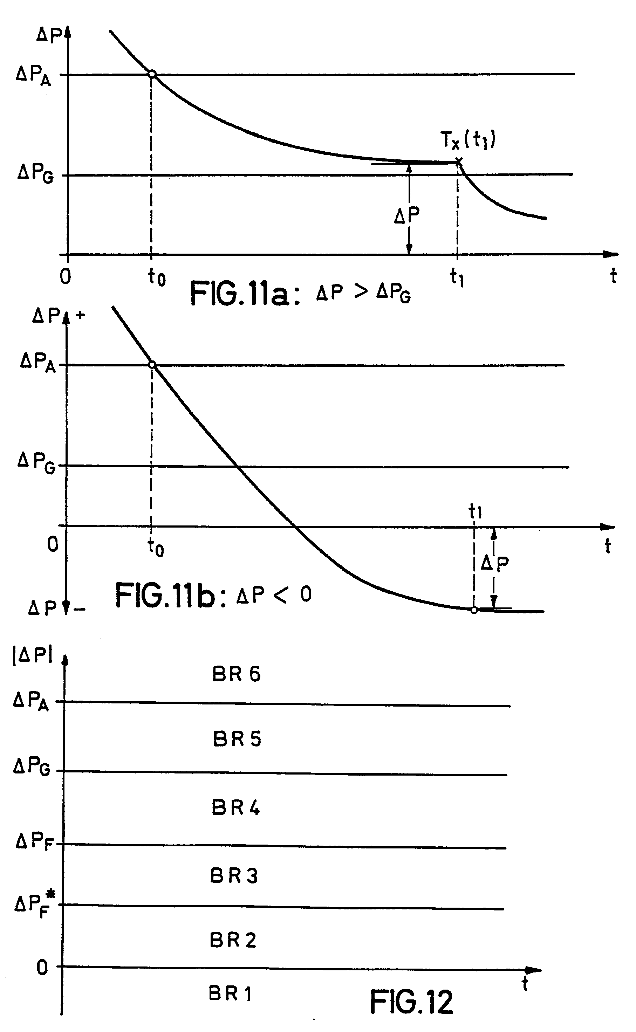

Ist zum Zeitpunkt $t_1$ $\Delta P > \Delta P_G$, so wird mit relativ großen variablen Tx-Impulsen $\Delta P$ in den Bereich $0 < \Delta P < \Delta P_G$ gebracht. Die beschriebenen Fälle der $\Delta P_A$-Optimierung zeigen Fig. 11a und 11b. Außer den in den Figuren 11a und 11b dargestellten Fällen kann $\Delta P_A$ auch gesteuert verstellt werden z.B. in Abhängigkeit von der Bordspannung oder des Vorratdruckes.

Mann kann den Feinregelbereich $0 \leq \Delta_P \leq \Delta P_F$ nochmals unterteilen in Berei che $\Delta P_F \leq \Delta_P \leq \Delta P_F^*$ und $0 \leq \Delta_P \leq \Delta P_F^*$. Für den 0 benachbarten Bereich werden ebenfalls die gleichen Regeln bei evtl. unterschiedlichen Ausgangswerten verwendet wie nach Fig. 7 beschrieben, jedoch z.B. eine Änderung von $T_E$ nur nach jeweils zwei Impulsen vorgenommen.

Im Gegensatz zum Grobregelbereich $\Delta P_F < \Delta_P < \Delta P_G$ gilt für den Feinregelbereich primär die Forderung nach Einstellgenauigkeit.

In Fig. 12 sind für die oben erläuterte Ausführungsform die verschiedenen Bereiche für die Druckregelung dargestellt. Diesen sind folgende Wirkungen zugeordnet:

Bereich 6 (BR6): Normalbetrieb, d.h. Ventildaueransteuerung bis $\Delta P_A$

Bereich 5 (BR5): Abfangbereich (gilt nur für Druckaufbau)

Bereich 4 (BR4): Grobregelbereich;

Bereich 3 (BR3): Feinverstellbereich zur Annäherung

Bereich 2 (BR2): Feinverstellbereich, Feinannäherung

Bereich 1 (BR1): Überschwingbereich; $\Delta_P$ muß in Gegenrichtung beeinflußt werden.

Im Bereich 2 werden die Schwellen $E_1$ - $E_4$ des Reglers verkleinert, was durch die Verbindungsleitung zwischen Block 54 und dem Regler 52 in Fig. 5 angedeutet ist.

Günstigerweise werden die Anfangsimpulse zur Ventilansteuerung im Bereich $\Delta P \leq \Delta P_G$ so klein gewählt, daß das Ventil durch diese gerade noch nicht betätigt wird. Mittels des Drucksensors wird dann erkannt, wann das Ventil angesprochen hat und ein Luftpaket durchgelassen hat. Durch dieses Herantasten findet das System den Zeitwert, der zur kürzesten Ansteuerung des Ventils notwendig ist und kann diesen oder einen modifizierten Zeitwert für spätere Ansteuerungen abspeichern. Wie bei den Werten für $T_o$ und $\Delta T_F$ und $\Delta T_G$ kann der Regler ohne besondere Anpassung an das System die optimalen Werte ermitteln und zur Verwendung bei weiteren Bremsungen abspeichern. Der Regler ist also lernfähig (adaptiv) und kann sich selbst auf beliebige Bremssysteme einstellen. Günstigerweise wird zur Durchführung dieser Regelung ein Mikroprozessor eingesetzt.

**Patentansprüche**

1. Bremssystem für ein Fahrzeug, bei dem durch den Fahrer ein Sollwert $A_{Soll}$ einer Zustandsgröße durch ein elektrisches Signal vorgegeben wird und bei dem abhängig von der Differenz $\Delta$ des Sollwertsignals $A_{Soll}$ und eines die Zustandsgröße wiedergebenden, durch Messung gewonnenen Istwertsignals $A_{Ist}$ ein durch den Sollwert bestimmter Bremsdruck durch Steuerung einer Magnetventilanordnung (2, 55) mittels eines Schaltschwellen aufweisenden Reglers (5, 42) eingeregelt wird, wobei die Magnetventilanordnung zwischen einer Druckquelle (3) und einer oder mehreren Radbremsen (1, 40a, 40b) eingeschaltet ist und einen Druckaufbau, Druckabbau und eine Druckkonstanthaltung an den Radbremsen erlaubt, <u>dadurch gekennzeichnet</u>, daß solange der Betrag der Differenz $\Delta$ grösser als ein vorgegebener

Wert $\Delta_G$ ist, die Bremsdruckeinregelung durch entsprechende Steuerung der Magnetventilanordnung (55a) in die Stellung Druckaufbau oder Druckabbau erfolgt, daß in dem Bereich für $\Delta \leq \Delta_G$ die Regelung dadurch erfolgt, daß die Magnetventilanordnung (55a) gepulst zum weiteren Druckaufbau oder -abbau angesteuert wird, daß die einen Druckaufbau oder einen Druckabbau bewirkenden Impulse in ihrer Länge $T_E$ ausgehend von einem Anfangswert $T_0$ veränderbar sind, wobei die Längenänderung der Länge $T_E$ mit der Zahl der benötigen Impulse anwächst, und daß es mit einem Antiblockierregelsystem kombiniert ist.

2. Bremssystem nach Anspruch 1, dadurch gekennzeichnet, daß der Bereich $0 < \Delta \leq \Delta_G$ in einen an $\Delta_2$ anschließenden Grobregelbereich ($\Delta_F \leq \Delta \leq \Delta_G$) und einen zwischen dem Grobregelbereich und 0 wirksamen Feinregelbereich ($0 < \Delta < \Delta_F$) unterteilt ist.

3. Bremssystem nach Anspruch 1, dadurch gekennzeichnet, daß die Änderung $\Delta T_G$ bzw. $\Delta T_F$ der Länge $T_E$ von der Größe des Sollwertes $A_{Soll}$ abhängig ist.

4. Bremssystem nach Anspruch 1 oder 3, dadurch gekennzeichnet, daß die Änderung $\Delta T_G$ bzw. $\Delta T_F$ der Länge $T_E$ von der vorhandenen Differenz $\Delta$ abhängig ist.

5. Bremssystem nach Anspruch 4, dadurch gekennzeichnet, daß der Bereich $\Delta \leq \Delta_F$ in wenigstens zwei Unterbereiche $\Delta_{F*} \leq \Delta \leq \Delta_F$ und $0 < \Delta < \Delta_{F*}$ aufgeteilt ist und für diese Unterbereiche unterschiedliche Änderungen $\Delta T_F$ vorgegeben sind.

6. Bremssystem nach Anspruch 3, dadurch gekennzeichnet, daß der Sollwertbereich in wenigstens zwei Sollwertunterbereiche aufgeteilt ist und daß für die einzelnen Unterbereiche unterschiedliche Änderungen $\Delta T_G$ bzw. $\Delta T_F$ vorgegeben sind.

7. Bremssystem nach einem der Ansprüchen 3 bis 6, dadurch gekennzeichnet, daß bei Abhängigkeit von der Differenz $\Delta$ und vom Sollwert $A_{Soll}$ in einem Speicher eine Vielzahl von Werten $\Delta T_G$ bzw. $\Delta T_F$ abgelegt sind, die sowohl vom gerade betroffenen Unterbereich des Sollwerts $A_{Soll}$ als auch vom gerade betroffenen Unterbereich der Differnz $\Delta$ abhängig sind.

8. Bremssystem nach einem der Ansprüche 4 bis 7, dadurch gekennzeichnet, daß die Anfangswerte $T_o$ vom Sollwert $A_{Soll}$ und/oder von derm

vorhandenen Differenz $\Delta$ abhängig sind.

9. Bremssystem nach Anspruch 8, dadurch gekennzeichnet, daß in einem Speicher eine Vielzahl von vom Sollwert $A_{Soll}$ und/oder der Differenz $\Delta$ abhängige Anfangswerte $T_o$ abgespeichert sind und bei Erreichen eines Unterbereichs diese Größen für $T_o$ als Anfangswerte verwendet werden.

10. Bremssystem nach den Ansprüchen 8 oder 9, dadurch gekennzeichnet, daß die jeweilige Impulslänge $T_E$ für Druckaufbau und Druckabbau nach folgendem Gesetz bemessen ist:

$$T_{E(1)} = T_O \,(\Delta, A_{Soll} \text{ und/oder Änderungsrichtung})$$
$$T_{E(K)} = T_{E(K-1)} + \Delta T \,(\Delta, A_{Soll}, \text{Änderungsrichtung und/oder Impulszahl})$$

für $K = 1$ bis $n$ ist.

11. Bremssystem nach Anspruch 10, dadurch gekennzeichnet, daß
$\Delta T = \Delta T_G \,(\Delta, A_{Soll} \text{ und/oder Änderungsrichtung}) \cdot 2^{\,f(n)}$ bzw. $\Delta T_F \,(\Delta, A_{Soll} \text{ und/oder Änderungsrichtung}) \cdot 2^{\,f(n)}$ ist, wobei $n$ die Laufzahl für die Impulse ist als auch der Optimierungsvorschritte sein kann.

12. Bremssystem nach einem der Ansprüche 2 bis 11, dadurch gekennzeichnet, daß nach Überschreiten des Grenzwertes $\Delta = 0$ der Druck durch einen den Druck in die Gegenrichtung ändernden Impuls geändert wird und daß der zuletzt verwendete, die Überschreitung des Grenzwertes $\Delta = 0$ bewirkende Impuls $T_{E\ddot{U}}$ in seiner Länge verkürzt und für spätere Bremsungen abgespeichert wird.

13. Bremssystem nach Anspruch 12, dadurch gekennzeichnet, daß die Länge des abzuspeichernden Impulses nach folgendem Gesetz bemessen wird:

$$T_{E(Korrig.)} = T_{E\ddot{U}} - [\Delta T' + a\,(\Delta) \cdot /\Delta^*/]$$

wobei $\Delta T'$ eine vom Ausgangsbereich abhängige Größe, $a$ eine von $\Delta$ abhängige Größe und $\Delta^*$ die Abweichung der Differenz $\Delta$ von 0 nach dem Überschreiten des Grenzwertes ist.

14. Bremssystem nach einem der Ansprüche 1 bis 13, dadurch gekennzeichnet, daß einem eingegebenen Sollwert $A_{Soll}$ eine kleine Bandbreite $A_{Soll} \pm \Delta A$ zugeordnet wird, und daß eine Optimierung der folgenden Impuls-Längen nur erfolgt, wenn der Sollwert während des gesamten vorherigen Impulses $(T_E + T_{BER})$ innerhalb dieser Bandbreite liegt.

15. Bremssystem nach einem der Ansprüche 1 bis 12, dadurch gekennzeichnet, daß die auf einen Druckaufbau oder Druckabbau folgende, eine Konstanthaltung des Drucks bewirkende Impulspause in ihrer Länge $T_{BER}$ variabel ist.

16. Bremssystem nach Anspruch 14, dadurch gekennzeichnet, daß sie in den einzelnen Unterbereichen für $\Delta$ unterschiedlich groß bemessen ist.

17. Bremssystem nach einem der Ansprüche 1 bis 14, dadurch gekennzeichnet, daß die Impulslänge $T_E$ mit der der Sollwert erreicht wird, abgespeichert und bei der nächsten Bremsung bei vergleichbaren Verhältnissen als Ausgangswert $T_E$ verwendet wird.

18. Bremssystem nach einem der Ansprüche 1 bis 14, dadurch gekennzeichnet, daß der die Magnetventilanordnung schaltende Regler ein Dreipunktregler mit unterschiedlichen Schaltschwellen für die Ein- und Abschaltung der Magnetventilanordnung für Druckaufbau und/oder Druckabbau ist.

19. Bremssystem, insbesondere nach Anspruch 18, bei dem durch den Fahrer ein Sollwert $A_{Soll}$ einer Zustandsgröße vorgegeben wird und bei dem abhängig von der Differenz $\Delta$ des Sollwertsignals $A_{Soll}$ und eines die Zustandsgröße wiedergebenden, durch Messung gewonnenen Istwertsignals $A_{Ist}$ ein durch den Sollwert bestimmter Bremsdruck durch Steuerung einer Magnetventilanordnung mittels eines Schaltschwellen aufweisenden Reglers eingeregelt wird, wobei die Magnetventilanordnung zwischen einer Druckquelle und einer oder mehrerer Radbremsen eingeschaltet ist und einen Druckaufbau, einen Druckabbau und eine Druckkonstanthaltung an den Radbremsen erlaubt, dadurch gekennzeichnet, daß der Ausgang des die Magnetventilanordnung schaltenden Reglers über eine zusätzliche derartige Rückführung mit dessen Eingang verbunden ist, daß die dort eingespeiste Regelabweichung $\Delta$ durch die bis zum Unterschreiten der Schaltschwelle kontinuierlich ansteigende Rückführgröße entsprechend verkleinert wird.

20. Bremssystem nach Anspruch 19, dadurch gekennzeichnet, daß der Anstieg so gewählt ist, daß durch eine einmalige Ventilansteuerung der Istwert an den Sollwert gut angenähert wird.

**21.** Bremssystem nach Anspruch 19 und 20, gekennzeichnet durch seine Anwendung bei der Normalregelung in der Weise, daß mit einer Ventilansteuerung der Differenzwert $\Delta$ in den Feinregelbetrieb gebracht wird.

**22.** Bremssystem nach einem der Ansprüche 1 bis 21, dadurch gekennzeichnet, daß im Feinregelbereich die Schaltschwellen des Reglers auf kleinere Werte umgeschaltet werden.

**23.** Bremssystem nach einem der Ansprüche 1 bis 21, dadurch gekennzeichnet, daß der Sollwert $A_{Soll}$ ein Bremsdruckwert $P_{Soll}$ ist.

**24.** Bremssystem nach Anspruch 21, dadurch gekennzeichnet, daß die Meßwertgeber zur Bestimmung des Istdrucks auch innerhalb der Antiblockierregelung ausgenutzt werden.

**25.** Bremssystem nach einem der Ansprüche 1 bis 24, dadurch gekennzeichnet, daß bei einem Regelvorgang mit $A_{Ist} < A_{Soll}$ (und damit einem Bremsdruckaufbau) vor Erreichen der Grenze $\Delta_G$ ein weiterer Bereich ($\Delta_G < \Delta < \Delta_A$) wirksam ist, in dem eine Druckaufbauimpulsbreite als Anfangswert $T_o$ und gegebenenfalls Änderungswerte $\Delta T$ vorgegeben sind.

**26.** Bremssystem nach Anspruch 25, dadurch gekennzeichnet, daß der Grenzwert $\Delta_A$ optimiert wird.

**27.** Bremssystem nach Anspruch 26, dadurch gekennzeichnet, daß der alte Grenzwert $\Delta_A$ um das Produkt a • $\Delta P$ korrigiert wird, wobei $\Delta_P$ die verbleibende Abweichung und a eine variable Systemgrößen sind.

**28.** Bremssystem nach einem der Ansprüche 1 bis 26, dadurch gekennzeichnet, daß die Anfangsimpulsbreiten $T_o$ wenigstens im Feinregelbereich so klein gewählt sind, daß erst ein korrigierter Folgeimpuls die Magnetventilanordnung zu betätigen vermag, und daß dessen Impulsbreite oder eine davon abhängige Impulsbreite abgespeichert wird.

**29.** Bremssystem nach Anspruch 14, dadurch gekennzeichnet, daß die Bandbreite ± $\Delta A$ entfällt, wenn die Ausgangsgröße (y*) des Reglers eine vorgegebene Zeit 0 war und daß danach eine Ausregelung des Drucks gemäß dem Sollwert $A_{Soll}$ erfolgt.

**Claims**

**1.** Braking system for a vehicle in which a nominal value $A_{nom}$ of a state variable is preset by the driver by means of an electrical signal and in which a braking pressure determined by the nominal value is corrected, in dependence on the difference $\Delta$ of the nominal-value signal $A_{nom}$ and on an actual-value signal $A_{act}$ which reproduces the state variable and is obtained by measurement, by controlling a solenoid valve arrangement (2, 55) by means of a controller (5, 42) exhibiting switching thresholds, the solenoid valve arrangement being inserted between a pressure source (3) and one or several wheel brakes (1, 40a, 40b) and allowing the pressure to be built up, reduced and kept constant at the wheel brakes, characterized in that, as long as the amount of the difference $\Delta$ is greater than a predetermined value $\Delta_G$, the braking pressure correction occurs by appropriately controlling the solenoid valve arrangement (55a) into the position of pressure build-up or pressure reduction in that control in the range for $\Delta \leq \Delta_G$ is effected by the fact that the solenoid valve arrangement (55a) is energised pulsed for further pressure build-up or reduction. that the pulses effecting a pressure build-up or a pressure reduction are variable in their length $T_E$, starting from a starting value $T_0$., whereby the length change of the length $T_E$ increases with the number of pulses needed., and that it is combined with antiblocking control system.

**2.** Braking system according to Claim 1, characterized in that the range $0 < \Delta \leq \Delta_G$ subdivided into a coarse control range ($\Delta_F \leq \Delta \leq \Delta_G$) which adjoins $\Delta_2$ and a fine control range ($0 < \Delta < \Delta_F$) which is effective between the coarse control range and 0.

**3.** Braking system according to Claim 1, characterized in that the change $\Delta T_G$ or $\Delta T_F$ of the length $T_E$ is dependent on the magnitude of the nominal value $A_{nom}$.

**4.** Braking system according to Claim 1 or 3, characterized in that the change $\Delta T_G$ and $\Delta T_F$ of the length $T_E$ is dependent on the existing difference $\Delta$.

**5.** Braking system according to Claim 4, characterized in that the range $\Delta \leq \Delta_F$ is divided into at least two sub-ranges $\Delta_F^* \leq \Delta \leq \Delta_F$ and $0 < \Delta < \Delta_F^*$ and different changes $\Delta T_F$ are predetermined for these sub-ranges.

6. Braking system according to Claim 3, characterized in that the nominal-value range is divided into at least two nominal-value sub-ranges and in that different changes $\Delta T_G$ and $\Delta T_F$ are predetermined for the individual sub-ranges.

7. Braking system according to one of Claims 3 to 6, characterized in that in the case of a dependence on the difference $\Delta$ and on the nominal value $A_{nom}$, a plurality of values $\Delta T_G$ and $\Delta T_F$, which are dependent both on the subrange of the nominal value $A_{nom}$ just concerned and on the sub-range of the difference $\Delta$ just concerned, are stored in a store.

8. Braking system according to one of Claims 4 to 7, characterized in that the initial values $T_o$ are dependent on the nominal value $A_{nom}$ and/or on the existing difference $\Delta$.

9. Braking system according to Claim 8, characterized in that a plurality of initial values $T_o$ dependent on the nominal value $A_{nom}$ and/or the difference $\Delta$ are stored in a store and these values for $T_o$ are used as initial values when a sub-range is reached.

10. Braking system according to Claims 8 or 9, characterized in that the respective pulse length $T_E$ for pressure build-up and pressure reduction is dimensioned in accordance with the following law:

$$T_{E(1)} = T_o (\Delta, A_{nom} \text{ and/or direction of change})$$
$$T_{E(K)} = T_{E(K-1)} + \Delta T (\Delta, A_{nom}, \text{ direction of change and/or number of pulses})$$

for K = 1 to n.

11. Braking system according to Claim 10, characterized in that $\Delta T = \Delta T_G (\Delta, A_{nom}$ and/or direction of change) $\cdot 2^{f(n)}$ or $\Delta T_F (\Delta, A_{nom}$ and/or direction of change) $\cdot 2^{f(n)}$, where n is the running variable for the pulses and can also be that of the optimisation advancing steps.

12. Braking system according to one of Claims 2 to 11, characterized in that, after the limit value $\Delta = 0$ has been exceeded, the pressure is changed by a pulse changing the pressure in the opposite direction and in that the pulse $T_{E\ddot{U}}$ last used and effecting the transgression of the limit value $\Delta = 0$ is shortened in its length and is stored for later braking operations.

13. Braking system according to Claim 12, characterized in that the length of the pulse to be stored is dimensioned in accordance with the following law:

$$T_{E(Corr.)} = T_{E\ddot{U}}, - [\Delta T', + a(\Delta)\bullet/\Delta^*/]$$

where $\Delta T'$ is a variable dependent on the initial range, a is a variable dependent on $\Delta$ and $\Delta^*$ is the deviation of the difference $\Delta$ from 0 after the transgression of the limit value.

14. Braking system according to one of Claims 1 to 13, characterized in that a narrow bandwidth $A_{nom} \pm \Delta A$ is allocated to a nominal value $A_{nom}$ entered and in that an optimisation of the subsequent pulse lengths occurs only if the nominal value is within this bandwidth during the entire previous pulse ($T_E + T_{BER}$).

15. Braking system according to one of Claims 1 to 12, characterized in that the pulse gap following a pressure build-up or pressure reduction and causing the pressure to be kept constant is variable in its length $T_{BER}$.

16. Braking system according to Claim 14, characterized in that it is dimensioned with different magnitude in the individual sub-ranges for $\Delta$.

17. Braking system according to one of Claims 1 to 14, characterized in that the pulse length $T_E$, with which the nominal value is reached, is stored and is used as initial value $T_E$ during the next braking operation in comparable conditions.

18. Braking system according to one of Claims 1 to 14, characterized in that the controller switching the solenoid valve arrangements a three-position controller having different thresholds for switching the solenoid value arrangement on and off for pressure build-up and/or pressure reduction.

19. Braking system, particularly in accordance with Claim 18, in which a nominal value $A_{nom}$ of a state variable is preset by the driver and in which a braking pressure determined by the nominal value is corrected, in dependence on the difference $\Delta$ of the nominal-value signal $A_{nom}$ and of the actual-value signal $A_{act}$ reproducing the state variable and obtained by measurement, by controlling a solenoid valve arrangement by means of a controller exhibiting switching thresholds, the solenoid valve arrangement being inserted between a pressure source and one or several wheel brakes and allowing the pressure to be built up, reduced and kept constant at the wheel brakes, characterized in that the output of the controller switching the solenoid valve arrangement is connected to its input via an additional such feedback, in that the control error $\Delta$ fed in there is correspondingly reduced by the feedback value which continuously rises until the signal drops below the switching threshold.

20. Braking system according to Claim 19, characterized in that the rise is selected in such a manner that the actual value well approximates the nominal value by a single valve energisation.

21. Braking system according to Claim 19 and 20, characterized by its use in the normal control mode, in such a manner that the difference value $\Delta$ is brought into fine control mode by means of one valve energisation.

22. Braking system according to one of Claims 1 to 21, characterized in that the switching thresholds of the controller are switched to smaller values in the fine control range.

23. Braking system according to one of Claims 1 to 21, characterized in that the nominal value $A_{nom}$ is a braking pressure value $P_{nom}$.

24. Braking system according to Claim 1, characterized in that the measurement value transmitters for determining the actual pressure are also utilised within the anti-blocking control system.

25. Braking system according to one of Claims 1 to 24, characterized in that in a control process with $A_{act} < A_{nom}$ (and thus a braking pressure build-up), a further range ($\Delta_G < \Delta < \Delta_A$), in which a pressure build-up pulse width is preset as starting value $T_o$ and, if necessary, change values $\Delta T$ are predetermined, is effective before the limit $\Delta_G$ is reached.

26. Braking system according to Claim 25, characterized in that the limit value $\Delta_A$ is optimised.

27. Braking system according to Claim 26, characterized in that the old limit value $\Delta_A$ is corrected by the product $a \cdot \Delta_P$, where $\Delta_P$ is the remaining error and $a$ is a variable system quantity.

28. Braking system according to one of Claims 1 to 26, characterized in that the starting pulse widths $T_o$ are selected to be small enough, at least in the fine control range, that the solenoid valve arrangement can only be operated by a corrected next pulse and that the pulse width of the latter or a pulse width depending on it is stored.

29. Braking system according to Claim 26, characterized in that the bandwidth $\pm \Delta A$ is omitted if the starting variable ($y^*$) of the controller was a predetermined time 0 and that the pressure is thereafter corrected in accordance with the nominal value $A_{nom}$.

**Revendications**

1. Système de freinage pour un véhicule, système dans lequel une valeur de consigne $A_{Soll}$ d'une variable d'état est prédéfinie par le conducteur grâce à un signal électrique, tandis qu'en fonction de la différence $\Delta$ entre le signal de valeur de consigne $A_{Soll}$ et un signal de valeur réelle $A_{Ist}$ obtenu par une mesure et reproduisant la variable d'état, une pression de freinage déterminée par la valeur de consigne est réglée par commande d'un dispositif de distributeur électromagnétique (2, 55) au moyen d'un régulateur (5, 42) comportant des seuils de commutation, ce dispositif de distributeur électromagnétique étant branché entre une source de pression (3) et un ou plusieurs freins de roues (1, 40a, 40b), et permettant d'augmenter la pression, de réduire la pression, et de maintenir constante la pression sur les freins de roues, système de freinage caractérisé en ce que tant que la valeur absolue de la différence $\Delta$ est supérieure à une valeur prédéfinie $\Delta_G$, la régulation de la pression de freinage s'effectue par commande appropriée du dispositif de distributeur électromagnétique (55a) dans la position d'augmentation de la pression ou de réduction de la pression, tandis que dans la zone où $\Delta \leq \Delta_G$ la régulation s'effectue en ce que le dispositif de distributeur électromagnétique (55a) est commandé par pulsations pour obtenir une augmentation ou une réduction complémentaire de la pression, que la longueur $T_E$ des impulsions provoquant une augmentation ou une réduction de la pression est susceptible d'être modifiée en partant d'une valeur initiale $T_0$, que la modification de longueur de la longueur $T_E$ croît avec le nombre des impulsions utilisées et qu'ie est combiné avec un système de réglage antiblocage.

2. Système de freinage selon la revendication 1, caractérisé en ce que la zone $0 < \Delta \leq \Delta_G$ est

subdivisée en une zone de réglage grossier ($\Delta_F \leqq \Delta \leqq \Delta_G$) se raccordant en $\Delta_2$ et une zone de réglage fin ($0 < \Delta < \Delta_F$) intervenant entre la zone de réglage grossier et 0.

3. Système de freinage selon la revendication 1, caractérisé en ce que la modification $\Delta T_G$ ou bien $\Delta T_F$ de la longueur $T_E$ dépend de la grandeur de la valeur de consigne $A_{Soll}$.

4. Système de freinage selon la revendication 1 ou 3, caractérisé en ce que la modification $\Delta T_G$ ou bien $\Delta T_F$ de la longueur $T_E$ dépend de la différence $\Delta$ existante.

5. Système de freinage selon la revendication 4, caractérisé en ce que la zone $\Delta \leqq \Delta_F$ est divisée en au moins deux zones secondaires $\Delta_F^* \leqq \Delta \leqq \Delta_F$ et $0 < \Delta < \Delta_F^*$ et que pour ces zones secondaires des modifications $\Delta T_F$ différentes sont prédéfinies.

6. Système de freinage selon la revendication 3, caractérisé en ce que la zone de valeur de consigne est divisée en au moins deux zones secondaires de valeur de consigne et que pour ces zones secondaires individuelles des modifications différentes $\Delta T_G$ ou bien $\Delta T_F$ sont prédéfinies.

7. Système de freinage selon une des revendications 3 à 6, caractérisé en ce que, en cas de dépendance de la différence $\Delta$ et de la valeur de consigne $A_{Soll}$, une pluralité de valeurs $\Delta T_G$ ou bien $\Delta T_F$ est déposée dans une mémoire, ces valeurs dépendant aussi bien de la zone secondaire précisément concernée de la valeur de consigne $A_{Soll}$ que de la zone secondaire précisément concernée de la différence $\Delta$.

8. Système de freinage selon une des revendications 4 à 7, caractérisé en ce que les valeurs initiales $T_0$ dépendent de la valeur de consigne $A_{Soll}$ et/ou de la différence $\Delta$ existante.

9. Système de freinage selon la revendication 8, caractérisé en ce qu'une pluralité de valeurs initiales $T_0$ dépendantes de la valeur de consigne $A_{Soll}$ et/ou de la différence $\Delta$ est déposée dans une mémoire, et lorsqu'une zone secondaire est atteinte, ces valeurs de $T_0$ sont utilisées comme valeurs initiales.

10. Système de freinage selon la revendication 8 ou 9, caractérisé en ce que la longueur d'impulsion $T_E$ à un moment donné pour l'augmentation et la réduction de la pression est déterminée d'après la loi suivante:

$T_{E(1)} = T_o$ ($\Delta$, $A_{Soll}$, et/ou sens de modification)
$T_{E(K)} = T_{E(K-1)} + \Delta T$ ($\Delta$, $A_{Soll}$, sens de modification et/ou nombre d'impulsions)

avec $K = 1$ à n.

11. Système de freinage selon la revendication 10, caractérisé en ce qu'on a $\Delta T = \Delta T_G$ ($\Delta$, $A_{Soll}$ et/ou sens de modification) $\cdot$ $2^{(f(n))}$ ou bien $\Delta T_F$ ($\Delta$, $A_{Soll}$ et/ou sens de modification) $\cdot$ $2^{f(n)}$, n pouvant être le nombre courant des impulsions comme également des étapes d'optimisation.

12. Système de freinage selon une des revendications 2 à 11, caractérisé en ce qu'après dépassement de la valeur limite $\Delta = 0$, la pression est modifiée par une impulsion modifiant cette pression en sens inverse, tandis que l'impulsion $T_{EÜ}$ utilisée en dernier lieu est provoquant le dépassement de la valeur limite $\Delta = 0$ est raccourcie en longueur et mémorisée pour des freinages ultérieurs.

13. Système de freinage selon la revendication 12, caractérisé en ce que la longueur de l'impulsion à mémoriser est déterminée d'après la loi suivante:

$$T_{E(corrigée)} = T_{EÜ} - [\Delta T' + a(\Delta)./\Delta^*/].$$

$\Delta T'$ étant une grandeur dépendante de la zone de départ, a une grandeur dépendante de $\Delta$ et $\Delta^*$ l'écart entre la différence $\Delta$ et 0 après le dépassement de la valeur limite.

14. Système de freinage selon une des revendications 1 à 13, caractérisé en ce que, à une valeur de consigne $A_{Soll}$ introduite est associée une faible largeur de bande $A_{Soll} \pm \Delta A$ et qu'une optimisation des longueurs d'impulsions suivantes ne peut s'effectuer que lorsque la valeur de consigne pendant la totalité de l'impulsion précédente ($T_E = T_{BER}$) se situe à l'intérieur de cette largeur de bande.

15. Système de freinage selon une des revendications 1 à 12, caractérisé en ce que la longueur $T_{BER}$ d'une interruption des impulsions faisant suite à une augmentation ou à une réduction de la pression et provoquant le maintien d'une pression constante, est variable.

16. Système de freinage selon la revendication 14, caractérisé en ce que cette longueur est déterminée selon une importance différente dans les différentes zones secondaires pour $\Delta$.

**17.** Système de freinage selon une des revendications 1 à 14, caractérisé en ce que la longueur $T_E$ des impulsions avec laquelle est obtenue la valeur de consigne, est mémorisée et utilisée comme valeur de départ $T_E$ lors du freinage suivant dans des conditions comparables.

**18.** Système de freinage selon une des revendications 1 à 14, caractérisé en ce que le régulateur commutant le dispositif de distributeur électromagnétique est un régulateur à trois points, avec des seuils de commutation différents pour l'enclenchement et le déclenchement du dispositif de distributeur électromagnétique pour l'augmentation de la pression et/ou la réduction de la pression.

**19.** Système de freinage, notamment selon la revendication 18, dans lequel une valeur de consigne $A_{Soll}$ d'une variable d'état, est prédéfinie par le conducteur et dans lequel en fonction de la différence $\Delta$ entre le signal de valeur de consigne $A_{Soll}$ et un signal de valeur réelle $A_{Ist}$ obtenu par une mesure et reproduisant la variable d'état, une pression de freinage déterminée par la valeur de consigne est réglée par commande d'un dispositif de distributeur électromagnétique au moyen d'un régulateur comportant des seuils de commutation, le dispositif de distributeur électromagnétique étant branché entre une source de pression et un ou plusieurs freins de roues, et permettant une augmentation de la pression, une réduction de la pression et un maintien d'une pression constante sur les freins de roues, système de freinage caractérisé en ce que la sortie du régulateur commutant le dispositif de distributeur électromagnétique est reliée à l'entrée de ce régulateur par l'intermédiaire d'une rétroaction supplémentaire, tel que l'écart de réglage $\Delta$ introduit dans ce régulateur est diminué de façon correspondante par la grandeur de réaction augmentant de façon continue jusqu'au franchissement vers le bas du seuil de commutation.

**20.** Système de freinage selon la revendication 19, caractérisé en ce que cette augmentation est choisie de façon que la valeur réelle soit rapprochée de façon satisfaisante de la valeur de consigne par une seule commande du distributeur.

**21.** Système de freinage selon les revendications 19 et 20, caractérisé par son application dans le cas de la régulation normale, de façon que par une commande du distributeur, la valeur différentielle $\Delta$ soit amenée dans la zone de réglage fin.

**22.** Système de freinage selon une des revendications 1 à 21, caractérisé en ce que dans la zone de réglage fin, les seuils de commutation du régulateur sont commutés sur des valeurs plus petites.

**23.** Système de freinage selon une des revendications 1 à 21, caractérisé en ce que la valeur de consigne $A_{Soll}$ est une valeur de pression de freinage $P_{Soll}$.

**24.** Système de freinage selon la revendication 1, caractérisé en ce que l'indicateur de valeur de mesure pour la détermination de la pression réelle est également utilisé à l'intérieur de la régulation anti-blocage.

**25.** Système de freinage selon une des revendications 1 à 24, caractérisé en ce que, dans le cas d'un processus de réglage avec $A_{Ist} < A_{Soll}$ (et donc une augmentation de la pression de freinage), une autre zone ($\Delta_G < \Delta < \Delta_A$) est opérationnelle avant que soit atteinte la limite $\Delta_G$, zone dans laquelle sont prédéfinies une largeur d'impulsion d'augmentation de pression en tant que valeur initiale $T_0$ et, éventuellement, des valeurs de modification $\Delta T$.

**26.** Système de freinage selon la revendication 25, caractérisé en ce que la valeur limite $\Delta_A$ est optimisée.

**27.** Système de freinage selon la revendication 26, caractérisé en ce que l'ancienne valeur limite $\Delta_A$ est corrigée du produit $a \cdot \Delta P$, $\Delta P$ étant l'écart subsistant et a une grandeur variable du système.

**28.** Système de freinage selon une des revendications 1 à 26, caractérisé en ce que les largeurs d'impulsions initiales $T_o$ sont, au moins dans la zone de réglage fin, choisies suffisamment petites pour que seule une impulsion séquentielle corrigée puisse actionner le dispositif de distributeur électromagnétique, et que la largeur de cette impulsion, ou bien une largeur d'impulsion en dépendant soit mémorisée.

**29.** Système de freinage selon la revendication 14, caractérisé en ce que la largeur de bande ± $\Delta A$ est supprimée lorsque la grandeur de sortie (Y*) du régulateur était un temps prédéfini 0 et qu'ensuite s'effectue une régulation de la pression selon la valeur de consigne $A_{Soll}$.

FIG.1

FIG.2

FIG. 3

FIG.4

FIG.5

FIG. 6

FIG. 7

FIG. 8

FIG. 9

FIG.10

FIG.11a: $\Delta P > \Delta P_G$

FIG.11b: $\Delta P < 0$

FIG.12